# EUROPEAN PATENT APPLICATION

(11) **EP 2 541 979 A1**
(43) Date of publication of application: **02.01.2013**
(21) Application number: 11360027.4
(22) Date of filing: 29.06.2011
(51) Int. Cl.: H04W 16/14, H04W 72/04

(54) **Allocating identifiers**

(71) Applicant: Alcatel Lucent, 75007 Paris (FR)
(72) Inventor: Hou, Jindong, Westlea Swindon, SN5 7BY (GB)
(74) Representative: Script IP Limited

(57) **Abstract**

A method of allocating identifiers, a computer program product and an apparatus are disclosed. The method of allocating identifiers for use by network nodes of a wireless telecommunications network when initiating establishment of a radio link, comprises the steps of: partitioning a set of the identifiers in accordance with a partitioning ratio between a first subset of the identifiers allocated for use by a first type of network node when initiating establishment of a radio link and a second subset of the identifiers allocated for use by a second type of network node when initiating establishment of a radio link; determining a usage ratio of the set of identifiers between the first type of network node and the second type of network node by monitoring use of the first subset of the identifiers and the second subset of the identifiers by the network nodes when initiating establishment of a radio link; and adjusting the partitioning ratio of the set of the identifiers between the first subset of the identifiers and the second subset of the identifiers in proportion to the usage ratio. Through this approach, it is possible to dynamically adapt the partitioning ratio to reflect the types of network node present in the network at any particular time to ensure that sufficient identifiers are available for each type of network node which helps to improve overall network performance.

## Description

### FIELD OF THE INVENTION

The present invention relates to a method of allocating identifiers, a computer program product and an apparatus.

### BACKGROUND

In a cellular wireless telecommunication network, radio coverage is provided by areas known as cells. A base station is located to provide each cell. A base station may support more than one cell providing coverage in the same geographical area. User equipment in the cell served by a base station receives information and data from the base station and transmits information data to the base station. Information and data transmitted by the base station to the user equipment occurs on channels known as downlink channels. Information and data transmitted by user equipment to the base station occurs on uplink channels. User equipment can move between cells.

Services provided to user equipment are typically overseen by a radio network controller (RNC). The radio network controller communicates with user equipment and base stations and determines which base station each user equipment is primarily connected to. Furthermore, the radio network controller acts to control and communicate with a base station and user equipment when the user equipment moves from one cell to another.

Movement between cells provided by a single base station or between cells provided by different base stations is known as a mobility event or a relocation and is overseen by the radio network controller. Typically, the extent of the involvement of the radio network controller in such mobility events or relocations will depend on the current state of the user equipment. For example, relocation of user equipment when in an active state (i.e. actively supporting communication of data between the user equipment and a source cell) involves controlling the handover from the source cell to a target cell identified by a measurement report provided by the user equipment which identifies the measured characteristics and signals received from that target cell. However, relocation during an inactive state (such as an idle mode) may not require the involvement of the radio network controller to enable the user equipment to relocate to the target cell.

In order to improve the performance of wireless telecommunications networks, the functions provided by network nodes are constantly evolving. Accordingly, under in the third generation partnership project (3GPP), various standard exists which define the functions provided by different types of network node. Each release of the standard baselines the minimum functionality required by each network node in order to be compatible with that release of the standard.

Although these standards are carefully conceived to attempt to ensure that backwards compatibility (legacy support) still exists so that network nodes compatible with previous releases of the standards may continue to still be supported, unexpected practical difficulties can arise when attempting to accommodate different types of network nodes within the wireless telecommunications network.

Accordingly, it is desired to provide an improved technique for accommodating different types of network node within a wireless telecommunications network.

### SUMMARY

According to a first aspect, there is provided a method of allocating identifiers for use by network nodes of a wireless telecommunications network when initiating establishment of a radio link, the method comprising the steps of: partitioning a set of the identifiers in accordance with a partitioning ratio between a first subset of the identifiers allocated for use by a first type of network node when initiating establishment of a radio link and a second subset of the identifiers allocated for use by a second type of network node when initiating establishment of a radio link; determining a usage ratio of the set of identifiers between the first type of network node and the second type of network node by monitoring use of the first subset of the identifiers and the second subset of the identifiers by the network nodes when initiating establishment of a radio link; and adjusting the partitioning ratio of the set of the identifiers between the first subset of the identifiers and the second subset of the identifiers in proportion to the usage ratio.

The first aspect recognises that a problem with needing to support different types of network nodes within the same network to ensure legacy support is that the network may need to distinguish between those different types of user equipment whilst also ensuring that legacy network nodes can still be supported. In particular, existing identifiers used by legacy network nodes may also need to be used by new types of network nodes. However, the efficient use of these identifiers is not a straightforward task and any suboptimal use of these identifiers may impact on overall network performance.

Accordingly, a method of allocating identifiers is provided. The identifiers may be for use by network nodes when establishing a radio link or other communication link with the network. A set of identifiers may be partitioned based on a partitioning ratio. The partitioning ratio may determine the proportion of the set of identifiers which are allocated to a first type of network node and the proportion of the identifiers allocated to a second type of network node. The use of the identifiers may then be monitored and a ratio of the use of the identifiers by the types of network nodes determined. This may establish a usage ratio of the identifiers. The partitioning ratio may then be adjusted in proportion to the usage ratio. In this way, it can be seen that the identifiers may be partitioned into at least two subsets in order to provide identifiers for each of the different types of network node. The actual usage of those identifiers may then be monitored and this usage information may then be used to adjust the number of identifiers available for use by each different type of network node. For example, if the usage information indicates that the proportion of use of identifiers by one type of network node is greater than the proportion of identifiers allocated to that type of network node, then the number of identifiers available to that type of network node may be increased. This helps to ensure that the identifiers are allocated to those types of user equipment which most often need them. This helps to reduce the likelihood of types of network node having insufficient identifiers available for their use. This also helps to reduce the likelihood of types of network node being over allocated identifiers which are not needed. Through this approach, it is possible to dynamically adapt the partitioning ratio to reflect the types of network node present in the network at any particular time to ensure that sufficient identifiers are available for each type of network node which helps to improve overall network performance.

In one embodiment, the step of determining comprises determining the usage ratio of the set of identifiers over a predetermined period of time. Accordingly, the usage ratio may be determined over a time period. This time period may be hours, days, weeks or even months. The number of times each type of network node uses one of the identifiers may be determined in order to arrive at the usage ratio. By measuring over a period of time, temporary fluctuations in usage can be evened out to improve stability in identifier allocation and reduce proliferation in control signalling required to signal changes in identifier allocation.

In one embodiment, the step of determining comprises determining the usage ratio as a running average of usage ratios over a plurality of the predetermined periods of time. By maintaining an average of the usage ratios over many periods of time, again temporary fluctuations in usage can be evened out to improve stability in identifier allocation and reduce proliferation in control signalling required to signal changes in identifier allocation.

In one embodiment, the step of adjusting comprises adjusting the partitioning ratio of the set of the identifiers in proportion to the usage ratio when the usage ratio varies from the partition ratio for greater than a predetermined period of time. By only adjusting the partitioning ratio when the usage ratio varies for more than a particular period of time, unnecessary fluctuations in the partitioning ratio can be minimised which reduces processing and control signalling.

In one embodiment, the step of adjusting comprises adjusting the partitioning ratio of the set of the identifiers in proportion to the usage ratio when the usage ratio varies from the partition ratio by greater than a predetermined amount. By only adjusting the partitioning ratio when the usage ratio varies for more than a particular amount, unnecessary fluctuations in the partitioning ratio can be minimised which reduces processing and control signalling.

In one embodiment, the method comprises the step of generating a weighted usage ratio of the set of identifiers by applying different weightings to use of each subset of the identifiers and wherein the step of adjusting comprises adjusting the partitioning ratio of the set of the identifiers in proportion to the weighted usage ratio. Accordingly, the usage ratio may be weighted to favour one type of network node over another. For example, one type of network node may be associated with users which generally require an improved quality of service or an increasingly common type of network node. By favouring those types of network node and applying a weighting to usage by that type of network node it is likely that more identifiers are allocated for use by that type of network node than others.

In one embodiment, the method comprises the step of generating a failure ratio by monitoring for occurrences of failed establishment of the radio link for each type of network node and adjusting the partitioning ratio in proportion to the failure ratio. Accordingly, information available relating to the failure or lack of establishment of a radio link may also be used to influence the partitioning ratio. For example, a high incidence of failure may indicate that a type of network node is under allocated identifiers, irrespective of the partitioning ratio being used.

In one embodiment, the occurrences of failed establishment of the radio link include occurrences of failed network random access or other failure occurrences due to insufficient identifiers allocated to that type of network node or other causes.

In one embodiment, the step of partitioning comprises partitioning the set of the identifiers in accordance with a partitioning ratio between at least one further subset of the identifiers allocated for use by at least one further type of network node when initiating establishment of a radio link, the step of determining comprises determining a usage ratio of the set of identifiers between the at least one further type of network node by monitoring use of the at least one further subset of the identifiers when initiating establishment of a radio link; and the of adjusting comprises adjusting the partitioning ratio of the set of the identifiers between the first subset of the identifiers, the second subset of the identifiers and the at least one further subset of the identifiers in proportion to the usage ratio. Accordingly, a number of different types of network node may be allocated identifiers. In particular, more than two different types of network node may be allocated identifiers.

In one embodiment, the set of the identifiers comprises a predetermined maximum number of unique identifiers, each of which are allocatable to one of the subsets. Accordingly, fewer than all of the maximum number of identifiers may be allocated for use by the different subsets.

In one embodiment, the step of partitioning comprises partitioning the set of the identifiers in accordance with an initial predetermined partitioning ratio. Hence, an initial or starting partitioning ratio may be set to a default value. By monitoring usage of the identifiers, the network may self-adapt or reconfigure the partitioning ratio based on actual usage. It will be appreciated that this simplifies the setting of the initial partitioning ratio since if the ratio is not optimal, it may be changed automatically until it is.

In one embodiment, the first type of network node comprises eRACH capable user equipment and the second type of network node comprises a non-eRACH capable user equipment. However, it will be appreciated that a number of other different types of network node or network node functionality may be supported.

In one embodiment, the identifiers comprise at least one of signatures, sub-channels and channelisation codes. However, it will be appreciated that a number of other different types of identifiers may be supported.

In one embodiment, the radio link comprises one of an uplink and a downlink.

According to a second aspect, there is provided a computer program product operable, when executed on the computer, to perform the method steps of the first aspect.

According to a third aspect, there is provided an apparatus operable to allocate identifiers for use by network nodes of a wireless telecommunications network when initiating establishment of a radio link, the apparatus comprising: partitioning logic operable to partition a set of the identifiers in accordance with a partitioning ratio between a first subset of the identifiers allocated for use by a first type of network node when initiating establishment of a radio link and a second subset of the identifiers allocated for use by a second type of network node when initiating establishment of a radio link; determining logic operable to determine a usage ratio of the set of identifiers between the first type of network node and the second type of network node by monitoring use of the first subset of the identifiers and the second subset of the identifiers by the network nodes when initiating establishment of a radio link; and adjustment logic operable to adjust the partitioning ratio of the set of the identifiers between the first subset of the identifiers and the second subset of the identifiers in proportion to the usage ratio.

In one embodiment, the determining logic is operable to determine the usage ratio of the set of identifiers over a predetermined period of time.

In one embodiment, the determining logic is operable to determine the usage ratio as a running average of usage ratios over a plurality of the predetermined periods of time.

In one embodiment, the adjustment logic is operable to adjust the partitioning ratio of the set of the identifiers in proportion to the usage ratio when the usage ratio varies from the partition ratio for greater than a predetermined period of time.

In one embodiment, the adjustment logic is operable to adjust the partitioning ratio of the set of the identifiers in proportion to the usage ratio when the usage ratio varies from the partition ratio by greater than a predetermined amount.

In one embodiment, the network node comprises generating logic is operable to generate a weighted usage ratio of the set of identifiers by applying different weightings to use of each subset of the identifiers and the adjustment logic is operable to adjust the partitioning ratio of the set of the identifiers in proportion to the weighted usage ratio.

In one embodiment, the network node comprises generating logic operable to generate a failure ratio by monitoring for occurrences of failed establishment of the radio link for each type of network node and the adjustment logic is operable to adjust the partitioning ratio in proportion to the failure ratio.

In one embodiment, the occurrences of failed establishment of the radio link include occurrences of failed network random access or other failure occurrences due to insufficient identifiers allocated to that type of network node or other causes.

In one embodiment, the partitioning logic is operable to partition the set of the identifiers in accordance with a partitioning ratio between at least one further subset of the identifiers allocated for use by at least one further type of network node when initiating establishment of a radio link, the determining logic is operable to determine a usage ratio of the set of identifiers between the at least one further type of network node by monitoring use of the at least one further subset of the identifiers when initiating establishment of a radio link; and the adjustment logic is operable to adjust the partitioning ratio of the set of the identifiers between the first subset of the identifiers, the second subset of the identifiers and the at least one further subset of the identifiers in proportion to the usage ratio.

In one embodiment, the set of the identifiers comprises a predetermined maximum number of unique identifiers, each of which are allocatable to one of the subsets.

In one embodiment, the partitioning logic is operable to partition the set of the identifiers in accordance with an initial predetermined partitioning ratio.

In one embodiment, the first type of network node comprises eRACH capable user equipment and the second type of network node comprises a non-eRACH capable user equipment.

In one embodiment, the identifiers comprise at least one of signatures, sub-channels and channelisation codes.

In one embodiment, the radio link comprises one of an uplink and a downlink.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figures 2A and 2B illustrate a RACH and an eRACH procedure;
Figure 3 illustrates an algorithm for basic adaptive partitioning of identifiers;
Figure 4 illustrates an algorithm used for the allocation of signatures between RACH and eRACH capable user equipment;
Figures 5A and 5B show the algorithm of Figure 4 which has been enhanced to take account of hysteresis considerations;
Figure 6 shows the algorithm of Figure 4 which has been enhanced to take account of differential weightings;
Figure 7 shows the algorithm of Figure 4 which has been enhanced to take account of access collisions; and
Figures 8A and 8B show an example deployment and signature partitioning.

### DESCRIPTION OF THE EMBODIMENTS

### Wireless Telecommunications System

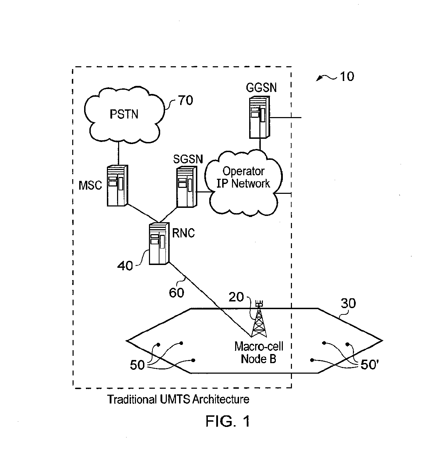

Figure 1 illustrates a wireless telecommunications system 10 according to one embodiment. User equipment 50, 50' roam through the wireless telecommunications system. In this example, two groups or types of user equipment 50, 50' are present, each different group or type has slightly differing functionality based typically on their conformance with a particular release of a standard. However, it will be appreciated that typically more than two different groups or types of user equipment or other network nodes may be present within a wireless telecommunications system. In order to enable the different groups or types of network nodes to be identified, a set of identifiers may be portioned between those groups or types of network nodes as will be explained in more detail below. Base stations 20 are provided which support areas of radio coverage 30. A number of such base stations 20 are provided and are distributed geographically in order to provide a wide area of coverage to user equipment 50, 50'. When user equipment is within an area served by a base station 30, communications may be established between the user equipment and the base station over associated radio links. Each base station typically supports a number of sectors within the geographical area of service 30.

Typically, a different antenna within a base station supports each associated sector. Accordingly, each base station 20 has multiple antennae and signals sent through the different antennae, are electronically weighted to provide a sectorised approach. Of course it will be appreciated that Figure 1 illustrates a small subset of the total number of user equipment and base stations that may be present in a typical communication system.

The wireless communications system is managed by a Radio Network Controller (RNC) 40. The RNC 40 controls operation of the wireless communications system by communicating with a plurality of base stations over a backhaul communications link 60. The network controller also communicates with user equipment 50, 50' via each base station and thus effectively manages the entire wireless communications system.

In a multi carrier system each sector served by a base station can have several carrier frequencies or "carriers" associated therewith. A carrier or cell supported by a carrier covers the same geographical region as a sector. Each cell is served by a different carrier frequency. It will therefore be understood that in a single carrier system the cell is equivalent to a sector since a sector has only one cell or carrier frequency. Nonetheless, in a multi carrier network each sector may comprise several cells, each cell being served simultaneously by a different carrier frequency.

User equipment 50, 50' typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the RNC 40, allocate a resource to user equipment in a manner that aims to optimise operation of the wireless telecommunications network 10. User equipment 50, 50' can send data to a base station 20 on one or more carriers known as "uplink carriers". User equipment 50, 50' can send receive data from a base station 20 on one or more carriers known as "downlink carriers".

In a multi carrier system, having either multi carrier uplink or multi carrier downlink, each carrier will have substantially independent downlink radio links from a base station to user equipment and vice versa. The downlink radio links are managed independently, since each carrier will likely have different radio publication paths to user equipment.

### Operation Overview

Before discussing embodiments in more any detail, first an overview will be provided. As wireless telecommunications networks are developed, additional or changed functionality for network nodes may be specified from time to time. This leads to the existence of different types of the same network node, each of which may have slightly differing functionality. For example, the third generation partnership project (3GPP) standards may specify different functionalities required from network nodes for different releases of the standards. This means that there could be, for example, different types of user equipment, such as that type specified by the Release 8 the standards and that type specified by Release 9 of the standards, and so on; these may be referred to as "Release 8 user equipment" and "Release 9 user equipment". The same situation exists for other network nodes.

When introducing new functionality, it is generally necessary to maintain backwards compatibility with previous types or "legacy" network nodes. That is to say that the network will generally be required to support the functionality of previous different types of network nodes. Accordingly, it may be necessary to distinguish between the different types of network nodes in order that their functionality may be determined and supported. In some situations, an identifier may be provided which may be used to distinguish between the types of network nodes. In some situations, a pool of existing identifiers used by legacy equipment may need to be reallocated between different types of network nodes in order to maintain backwards compatibility with legacy network nodes whilst also enabling the different types of network nodes to be distinguished. For example, existing signatures, time slots or sub-channels may be divided for use between the different types of network node. In particular, one group of the identifiers may be allocated for use by one type of network node, whereas another group of the identifiers may be allocated for use by another type of network node. It will be appreciated that the identifiers may be allocated between more than two different types of network node. When the network receives information associated with that identifier it is able to determine the type of network node. However, since the number of identifiers allocatable are typically fixed (or have a maximum possible number), the number of identifiers available for use by any one particular type of network node is limited. Accordingly, a situation can occur where insufficient identifiers are available for use by one particular type of network node whilst an abundance of identifiers are available for use by another type of network node.

Accordingly, embodiments provide a technique where the relative allocation of identifiers between different types of network node is adapted dynamically, based on the usage of those identifiers. That is to say that the partitioning of the available identifiers between the different types of network node is changed based on actual usage. For example, many different types of network node may need to be supported. In a particular deployment, it could be a considerable period of time before the newest type of network node is even present within the network. Accordingly, a minimal number of identifiers may be allocated for that type of network node and more of the identifiers may be allocated for types of network node which are currently being supported by the network. As time progresses, the occurrence of the newest type of network node may increase, whilst the occurrence of the oldest type of network node may decrease. Accordingly, the allocation of identifiers may be adjusted to provide more identifiers for the newest type of network node and fewer identifiers for the oldest type of network node. In this way, it can be seen that the relative availability of identifiers can be shared between the different types of network node being supported by the network based on the presence of those types of network nodes within the network. This helps to ensure that the optimal proportions of identifiers exist for the different types of network node and so improves the overall performance of the network.

Although the following describes one particular example arrangement relating to different types of user equipment and the allocation of signatures when establishing an uplink, it will be appreciated that the techniques described are applicable to other types of network nodes in other situations where a set of identifiers are used to distinguish between the types of network nodes.

In particular, the following describes functionality of two different types of user equipment; pre-release 8 user equipment which are operable to perform a random access channel (RACH) procedure, and release 8 user equipment which are operable to perform an enhanced RACH (eRACH) procedure, both of which will now be described in more detail.

### RACH Procedure

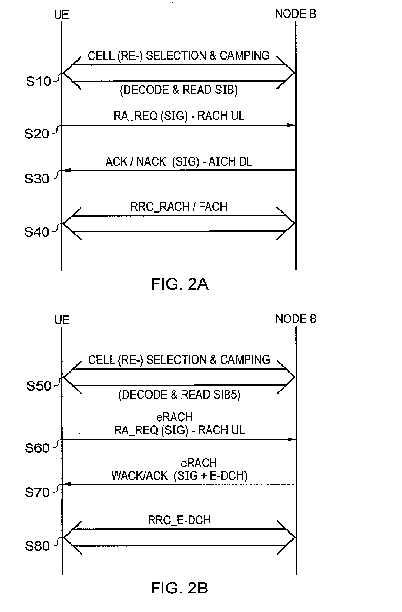

As shown in Figure 2A, pre-release 8 user equipment establish an uplink with a cell in accordance with a RACH procedure as follows. At step S10, the user equipment undergoes cell selection or reselection and camps on the cell. The user equipment decodes and reads the system information block (SIB) which includes the signatures available when seeking to establish an uplink.

At step S20, the user equipment needs to establish an uplink and so performs a RACH procedure. Accordingly, a radio access request is made over the RACH with user equipment randomly selecting one of the available signatures.

At step S30, the base station transmit either an acknowledgement (ACK) or non-acknowledgement (NACK) to the user equipment on the Acquisition Indicator Channel (AICH) with the same signature.

At step S40, if an ACK has been received, then the user equipment attempts to set up a connection using a radio resource control (RRC) procedure using the RACH.

### eRACH Procedure

As shown in Figure 2B, release 8 eRACH-capable user equipment establish an uplink with a cell in accordance with an eRACH procedure as follows. At step S50, the user equipment undergoes cell selection or reselection and camps on the cell. The user equipment decodes and reads the system information block 5 (SIB5) which includes the signatures available when seeking to establish an uplink.

Because the base station is able to support both pre-release 8 and post-release 8 user equipment, and perform both RACH and eRACH procedures, the total number of available signatures are partitioned between those allocated for RACH and those allocated for eRACH. Accordingly, the signatures identified in the Common E-DCH System information information element (IE) in SIB5 are only those for use by eRACH, whereas those signatures identified in other parts of SIB are only those for use by RACH. Because only eRACH capable user equipment will recognise the Common E-DCH System information (IE) in SIB5, only those user equipment will attempt to use those signatures. Likewise, because only RACH capable user equipment will decode other parts of SIB, only those user equipment will attempt to use those signatures.

At step S60, the user equipment needs to establish an uplink and so transmits a radio access request to the serving cell using a signature that has been reserved for eRACH. At step S70, the base station determines whether to allow access to the user equipment and transmits either an ACK or a NACK which also indicates which common Enhanced Dedicated Channel (E-DCH) to use.

Thereafter, at step S80, if the user equipment receives an acknowledgement, then the user equipment performs the radio resource control procedure using the allocated E-DCH. Because the radio resource control procedure is performed over E-DCH instead of over RACH, the connection procedure occurs much more quickly since E-DCH is much faster than RACH.

### Basic Partitioning Algorithm

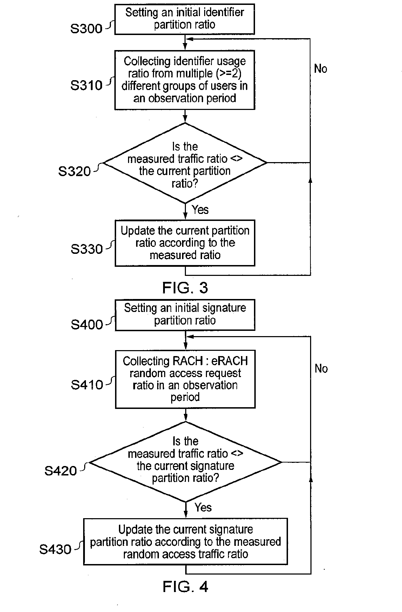

Figure 3 illustrates a first example algorithm for basic adaptive partitioning of the identifiers. At step S300, an initial partition ratio of the identifiers is set. That is to say that at least some of the total available identifiers are allocated between the expected different types of network nodes.

At step S310, the use of those identifiers over an observation period is determined. For example, the number of service requests made from different types of user equipment may be determined over that period. From this information, the ratio of requests from those different types of user equipment may be determined.

At step S320, a determination is made of whether the measured service request or traffic ratio differs from the current partition ratio. If not, then processing returns to step S310. If the two ratios differ, then processing proceeds to step S330.

At step S330, the current partition ratio is changed according to the measured service request or traffic ratio.

In this way, it can be seen that the initial estimate of an appropriate partition ratio can be changed based on actual use of the identifiers and the number of identifiers available to each type of user equipment may be altered based on the actual use of those identifiers by those types of user equipment. That is to say that those types of user equipment which make service requests more often are allocated more identifiers than those that make service requests less often.

### Basic RACH and eRACH Partitioning Algorithm

Figure 4 illustrates an algorithm used for the allocation of signatures between RACH and eRACH capable user equipment.

At step S400, an initial partition ratio of the allocated signatures is determined. This may partition the allocated signatures in, for example, a 1:1 ratio which provide half of the signatures for use by RACH capable user equipment and half of the signatures available for eRACH capable user equipment.

At step S410, the number of RACH and eRACH random access requests are collected over an observation period. From this information, it is possible to determine a ratio of the RACH to eRACH requests. This is designated the measured traffic ratio.

At step S420, a determination is made of whether the measured traffic ratio differs from the current signature partition ratio. If the two ratios do not differ, then processing returns to step S410. If the two ratios do differ then processing proceeds to step S430.

At step S430, the current signature partition ratio is updated according to the measured traffic ratio. Hence, the partitioning of the available signatures can be adaptably changed dynamically according to actual use of those signatures to ensure that sufficient signatures exist for each type of user equipment.

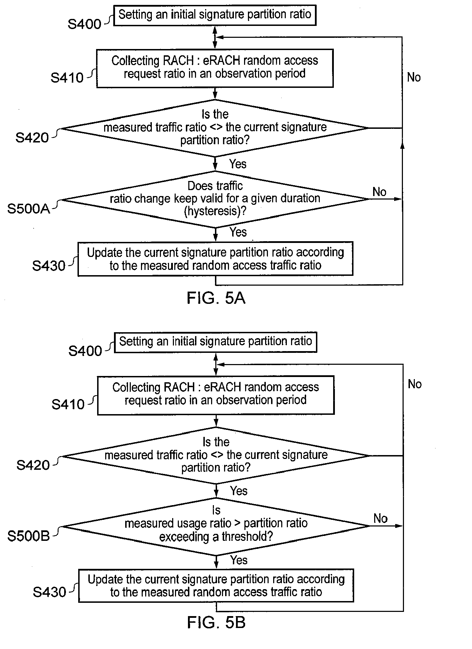

Figures 5 to 7 show further enhancements to the partitioning algorithm which may be incorporated either alone or in combination.

### Hysteresis Partitioning Algorithm

Figures 5A and 5B show the algorithm of Figure 4 which has been enhanced to take account of hysteresis considerations. Accordingly, in Figure 5A and following step S420, if the measured traffic ratio differs from the current signature partition ratio, then an additional processing step at step S500A occurs to determine whether the measured traffic ratio differs from the current signature partition ratio for greater than a predetermined period of time. That is to say that when the measured traffic ratio changes, the signature partition ratio is not changed unless such a measured traffic ratio change occurs for a given period (for example several hours, several days, several weeks or even several months). Alternatively, as shown in Figure 5B, a change in the signature partition ratio may only be made when the difference between the measure traffic ratio and the current signature partition ratio is greater than a predetermined amount. Of course, both of these hysteresis considerations may be combined. Such an approach prevents constant fluctuation in the partitioning of signatures which increases stability and reduces control signalling that would be required to indicate these changes in signature allocation.

If the hysteresis condition is not met then processing returns to step S410. If the condition is met, then processing proceeds to step S430, both of which are mentioned above.

### Differential Weighting Algorithm

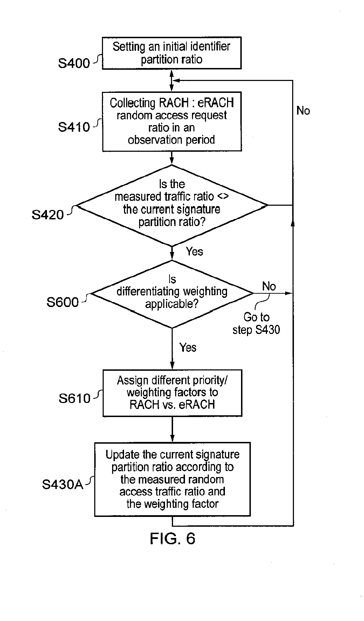

Figure 6 shows the algorithm of Figure 4 which has been enhanced to take account of differential weightings. Different weightings may be applied to each type of user equipment in order to preferentially allocate more signatures to one type of user equipment than to others. That is to say that different priorities or weighting factors may be assigned to RACH and eRACH user equipment, such as giving a greater than one weighting to eRACH user equipment (which is applied to the measured traffic ratio to calculate a weighted measured traffic ratio).

Accordingly, should it be determined at step S420 that the measure traffic ratio differs to the current signature partition ratio then the additional steps of S600, S610 and S430A occur.

At step S600, a determination is made of whether differential weighting applies. If not, then processing proceeds to step S430 as mentioned above. If differential weighting does apply, then processing proceeds to step S610.

At step S610, different weighting factors are applied to the collected RACH and eRACH random access requests to arrive at a weighted measured traffic ratio. For example each eRACH request may be allocated a relative weighting of 1.1 (which favours the partitioning of signatures to support eRACH).

At step S430A, the current signature partition ratio is updated according to the weighted traffic ratio and processing returns to step S410.

### Access Collision Algorithm

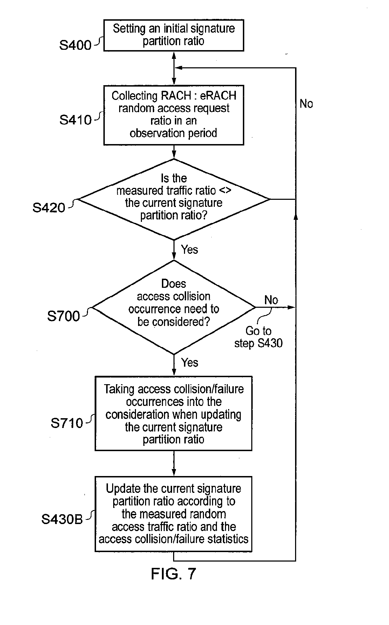

Figure 7 shows the algorithm of Figure 4 which has been enhanced to take account of access collisions. In the case of heavy access traffic, user equipment may use the same signature for random access at the same time. This collision may not be recognised by the network unless the network detects a failure in receiving either legacy RACH messages on RACH or eRACH messages on the allocated common E-DCH. Such collision and/or failure statistics can be used as another factor to adjust the signature partition ratio. For example, should one type of user equipment experience more collisions than another type of user equipment, then more signatures may be allocated to the type of user equipment which is experiencing more collisions.

Should it be determined at step S420 that the measure traffic ratio differs from the current signature partition ratio then the additional steps of S700, S710 and S430B may be performed.

At step S700, a determination is made of whether access collision needs to be considered. If access collision does not need to be considered, then processing proceeds to step S430. If access collision does need to be considered then processing proceeds to step S710.

At step S710, access collision or failure occurrences are taken into account when updating the current signature partition ratio. In particular, the number of collisions or access failures which occurred for access requests for each type of user equipment may be determined. For example, it may be determined that 10% more requests for eRACH access result in collision than for RACH access. Thus the measured traffic ratio may be weighted or adjusted in consequence of the occurrence of such collisions. For example, if the measure traffic ratio is 1:1 in the above situation then the collision weighted measure traffic ratio may be adjusted 1: (1+10%) = 1:1.1 and the collision weighted traffic ratio is used at step S430B to update the current signature partition ratio.

### Example Deployment and Signature Partitioning

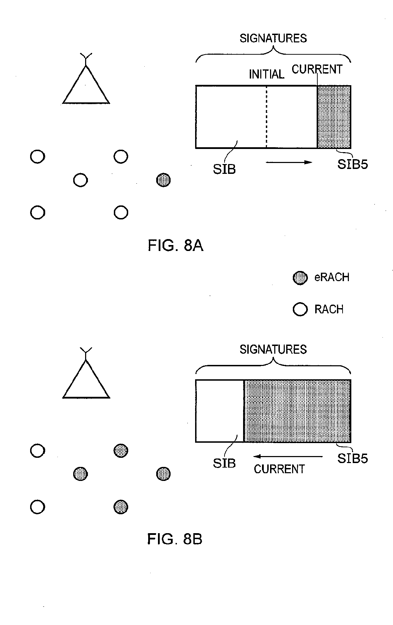

Figures 8A and 8B show an example deployment and signature partitioning. As can be seen in Figure 8A, a base station supports a cell having in this example six user equipment which are either RACH or eRACH capable. The base station sets an initial partitioning ratio of 1:1 so that half of the signatures are allocated for use by RACH capable user equipment and half are allocated for use by eRACH capable user equipment. The signatures allocated for RACH-capable and eRACH- capable user equipment are indicated in different parts of SIB respectively.

As can be seen in Figure 8A, only one of user equipment is eRACH capable. To simplify explanation, this example assumes that the number of access requests made by the user equipment is the same for both types of user equipment. Accordingly, from measured access requests, the partitioning of the signatures is adjusted so that more signatures are allocated for RACH and fewer are allocated for eRACH. When a change in the partitioning occurs, then an update is transmitted by sending a paging type 1 broadcast channel (BCCH) modification notification to all user equipment to update their signature allocation.

As shown in Figure 8B, the ratio of the different types of user equipment has changed such that there are more eRACH capable user equipment than RACH capable user equipment. In this example, the number of access requests will also change. Accordingly, the number of signatures allocated is varied. This means that the number of signatures allocated for eRACH increases and the number of signatures allocated for RACH is decreased.

However, it will be appreciated that the partitioning ratio is based on the number of access requests made by each type of user equipment, rather than the number of each type of user equipment. Although the above example considers the situation where each type of user equipment generates the same number of access requests, often the access requests and traffic volume generated from eRACH and non-eRACH user equipment are different. For example, if there is one eRACH user equipment but five non-ERACH user equipment in a cell (but eRACH-generated network access traffic is five times of that of a non-eRACH UE), then the total usage ratio becomes 1*5 : 5*1 = 5: 5.

As mentioned above, in 3GPP Rel8, for the enhanced uplink for CELL_FACH feature, the pool of PRACH preamble signatures (16 in total) has to be partitioned between legacy user equipment and e-RACH-capable user equipment. However, an improper partition ratio could cause serious service degradation to customers, such as mobile users, who then cannot access the network and incoming calls cannot be received by both traditional and smartphone users. No algorithm regarding the partition ratio and how to optimize the signature resources reserved to e-RACH has been defined. The optimal partition ratio is proportional to and adaptive to the dynamic random access traffic ratio between legacy and new user equipment. The NodeB (UTRAN) collects and keep records about how much RACH traffic a given cell receives from legacy user equipment and e-RACH-capable user equipment respectively within an averaging period. Thus the RACH traffic ratio and the optimal partition ratio can be readily calculated for a better allocation and system performance. For example, initially the partition ratio may be half-half (8:8). If within an observation period a cell receives 1390 RACH requests from legacy user equipment and 198 from e-RACH-capable user equipment, the RACH traffic ratio is about 7:1, thus the partition ratio shall also respect this fact. Hence the signature partition ratio is adjusted to 14:2 (7:1). The NodeB sends PAGING TYPE 1 (BCCH Modification Notification) to all user equipment to update their knowledge about the new signature allocation. Some time later (e.g. several months), since the smartphone take-up rate in this area (covered by the cell) evidently increased, the NodeB observed a different traffic ratio (3:1). Thus the signature partition ratio shall be adaptively tuned to 12:4 (3:1). The averaging period can be flexibly configured as per day, or per week, or per month, etc., depending on how quickly the RACH traffic ratio can be changed within a given area. This approach allows both legacy and smartphone (iPhone, etc.) users to co-exist and access wireless network services simultaneously. This enables the enhanced RACH and CELL_FACH state to be efficiently supported, which results in much improved handset battery life and faster PS service launch time for end users. Enhancements of the basic partitioning algorithm include: Weighting - assign different priority/weighting factors to legacy and eRACH user equipment, e.g. give a > 1 (e.g. 1.1) weighting for eRACH user equipment, which can be applied to the raw RACH traffic ratio to calculate the final signature ratio; Hysteresis - when RACH traffic ratio changes in an area, network won't change the signature ratio correspondingly unless such traffic ratio change is valid for a given period (e.g. several days); RACH Access Collision - in heavy access traffic case, two user equipment might use the same signature for random access at the same time. This collision won't be recognised by network unless the networks detects a failure in receiving either a legacy RACH message part or a user equipment message on allocated common E-DCH. Such collision / failure statics can be used as another factor to adjust the final signature ratio (e.g. the more collisions, the more signatures to allocate). For example, the raw measured random access traffic ratio of RACH:eRACH is 1:1, however, in the total received random access requests, Cell/NodeB finds out that 10% requests are in collision for eRACH access whereas 0% in collision for legacy RACH. Thus the "effective" traffic ratio is adjusted to 1:(1+10%) = 1: 1.1, and that amended traffic ratio is used to adjust the corresponding signature partition ratio same as the basic scheme.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of allocating identifiers for use by network nodes of a wireless telecommunications network when initiating establishment of a radio link, said method comprising the steps of:
partitioning a set of said identifiers in accordance with a partitioning ratio between a first subset of said identifiers allocated for use by a first type of network node when initiating establishment of a radio link and a second subset of said identifiers allocated for use by a second type of network node when initiating establishment of a radio link;
determining a usage ratio of said set of identifiers between said first type of network node and said second type of network node by monitoring use of said first subset of said identifiers and said second subset of said identifiers by said network nodes when initiating establishment of a radio link; and
adjusting said partitioning ratio of said set of said identifiers between said first subset of said identifiers and said second subset of said identifiers in proportion to said usage ratio.

2. The method of claim 1, wherein said step of determining comprises determining said usage ratio of said set of identifiers over a predetermined period of time.

3. The method of claim 2, wherein said step of determining comprises determining said usage ratio as a running average of usage ratios over a plurality of said predetermined periods of time.

4. The method of any preceding claim, wherein said step of adjusting comprises adjusting said partitioning ratio of said set of said identifiers in proportion to said usage ratio when said usage ratio varies from said partition ratio for greater than a predetermined period of time.

5. The method of any preceding claim, wherein said step of adjusting comprises adjusting said partitioning ratio of said set of said identifiers in proportion to said usage ratio when said usage ratio varies from said partition ratio by greater than a predetermined amount.

6. The method of any preceding claim, comprising the step of generating a weighted usage ratio of said set of identifiers by applying different weightings to use of each subset of said identifiers and wherein said step of adjusting comprises adjusting said partitioning ratio of said set of said identifiers in proportion to said weighted usage ratio.

7. The method of any preceding claim, comprising the step of generating a failure ratio by monitoring for occurrences of failed establishment of said radio link for each type of network node and adjusting said partitioning ratio in proportion to said failure ratio.

8. The method of any preceding claim, wherein said step of partitioning comprises partitioning said set of said identifiers in accordance with a partitioning ratio between at least one further subset of said identifiers allocated for use by at least one further type of network node when initiating establishment of a radio link, said step of determining comprises determining a usage ratio of said set of identifiers between said at least one further type of network node by monitoring use of said at least one further subset of said identifiers when initiating establishment of a radio link; and said of adjusting comprises adjusting said partitioning ratio of said set of said identifiers between said first subset of said identifiers, said second subset of said identifiers and said at least one further subset of said identifiers in proportion to said usage ratio.

9. The method of any preceding claim, wherein said set of said identifiers comprises a predetermined maximum number of unique identifiers, each of which are allocatable to one of said subsets.

10. The method of any preceding claim, wherein said step of partitioning comprises partitioning said set of said identifiers in accordance with an initial predetermined partitioning ratio.

11. The method of any preceding claim, wherein said first type of network node comprises enhanced RACH capable user equipment and said second type of network node comprises a non-enhanced RACH capable user equipment.

12. The method of any preceding claim, wherein said identifiers comprise at least one of signatures, sub-channels and channelisation codes.

13. The method of any preceding claim, wherein said radio link comprises one of an uplink and a downlink.

14. A computer program product operable, when executed on a computer, to perform the method steps of any preceding claim.

15. An apparatus operable to allocate identifiers for use by network nodes of a wireless telecommunications network when initiating establishment of a radio link, said apparatus comprising:
partitioning logic operable to partition a set of said identifiers in accordance with a partitioning ratio between a first subset of said identifiers allocated for use by a first type of network node when initiating establishment of a radio link and a second subset of said identifiers allocated for use by a second type of network node when initiating establishment of a radio link;
determining logic operable to determine a usage ratio of said set of identifiers between said first type of network node and said second type of network node by monitoring use of said first subset of said identifiers and said second subset of said identifiers by said network nodes when initiating establishment of a radio link; and
adjustment logic operable to adjust said partitioning ratio of said set of said identifiers between said first subset of said identifiers and said second subset of said identifiers in proportion to said usage ratio.
